# EUROPEAN PATENT SPECIFICATION

(11) **EP 4 284 165 B1**
(45) Date of publication and mention of the grant of the patent: **16.04.2025**
(21) Application number: 22705183.6
(22) Date of filing: 31.01.2022
(51) Int. Cl.: A01K 61/60

(54) **SUBMERSIBLE FISH CAGE FOR SEA-BASED FISH FARMING**
TAUCHBARER KÄFIG FÜR MEERBASIERTE FISCHZUCHT
CAGE PISCICOLE SUBMERSIBLE POUR ÉLEVAGE EN MER

(30) Priority: 01.02.2021 NO 20210119
(43) Date of publication of application: 06.12.2023
(73) Proprietor: SUBFARM AS, 6701 Måløy (NO)
(72) Inventor: LYSSAND, Morten, 1369 Stabekk (NO)
(74) Representative: Onsagers AS
(86) International application number: PCT/NO2022/050027
(87) International publication number: WO 2022/164327

(56) References cited:
- GB-A- 2 583 130
- NO-A1- 20 110 322

## Description

The present invention concerns a submersible fish cage or fish pen for sea-based farming of marine species as indicated in the preamble of claim 1.

### Background

Industrial fish farming has grown to be a huge global industry over the last decades. A vast majority of the fish farms use sea-based fish cages where the fish is separated from the environment by net walls arranged in the form of a standing cylinder in the sea, downwards from the sea surface.

A number of issues are encountered with these fish cages. One problem is the stress on the fish cages in rough winds and high waves, which oftentimes occur along the coastline. During storms, major damages may occur and fish may escape from the cages, which represents economical loss as well as an environmental strain on the local wild fish.

Another problem is the salmon lice and toxic algae that tends to attack the salmon in these fish cages where the fish density is very high. Multimillions of Euros are spent each year on measures to reduce this problem, ranging from medicines, water-flushing, laser guns, mechanical means. Still, the problem is not eliminated.

More recently, the problems of salmon lice, algae and rough weather have been attempted solved by arranging land-based fish farms, which however requires a huge supply of water and oxygen to establish a sound environment in these plants. Others attempt to solve the problem by arranging closed, rigid containers in the sea and also by allowing the containers to be periodically submerged during storms to avoid damage caused by winds and high waves.

Another challenge involved in fish farming is the transfer of live fish from one fish cage to another or from a fish cage to a vessel for its transportation to a fish treatment station or to a processing plant where the fish is slaughtered and subjected to further processing steps.

To crowd the fish for harvest is labour intensive and stressful for the fish. This process demands two workboats and people working on the upper outer part of the cage. Most of the work is done manually and include safety risk. The fish are crowded in the pens using sweep nets. The density of the fish is difficult to control and may inflict unnecessary stress on the fish during the harvest

An example of prior art fish cages is found in NO 332 585 B1 which discloses a closed fish pen comprising a central vertical tube around which a horizontal ring is arranged and a flexible net being outstretched around the horizontal ring, said net having a first net side axially displaceable around the vertical axis, thereby allowing the inner volume of the fish pen to be reduced to expel fish through opening(s) in the central, vertical tube.

Other examples of prior art are found in NO 20 110 322 A1, WO 2005/104 832 A1, WO 2013/ 032 818, US 2012/0132148 A1and GB 2 583 130A.

Still there seems to be a need for better, highly reliable and less costly solutions to the challenges of fish farming, in particular with regard to the mentioned problems caused by salmon lice and rough weather.

### Objectives

It is thus an objective of the present invention to provide a fish cage (system) for sea-based farming of marine species, which alleviates or eliminates the mentioned problems in a cost-efficient manner while maintaining or improving the safety for the personnel involved and to avoid unnecessary stress on the fish in its operation.

### The present invention

The above objective is fulfilled by the submersible fish cage according to the present invention as defined by claim 1.

Preferred embodiments of the invention are disclosed by the dependent claims.

The fish cage according to the present invention is arranged to be positioned at an elevation e.g. 75 meters below the sea surface where the influence of waves is insignificant even in strong winds and where there is no occurrence of salmon lice or similar parasites.

A pocket of air arranged at the top of the cage allows the fish to adjust the pressure in its swim bladder to maintain its well-being under the elevated pressure.

Feeding of the fish is conducted by a wet feeding system using water to pump the pellets from the feed platform to the cage.

The mid-part of the fish cage exhibits similarities with traditional fish cages in that its shape is generally cylindrical and constituted by net walls, typically of two layers, a comparatively fine meshed inner net wall to hold the fish inside and a comparatively strong outer net wall to prevent sharks and other predators from destroying and penetrating the cage.

Buoyancy elements may be integrated in or attached to the bottom unit as well as to the roof of the cage. When the fish cage is to be raised to the sea surface, e.g. for transferring of fish, a winch on the sea floor mooring line is operated to release more of the mooring line, allowing the buoyancy elements to raise the fish cage.

Removal of dead fish and droppings is supported by either an airlift system or a grinder located in centre of the bottom part of the cage.

A particularly sophisticated feature of the present invention is the manner with which the fish cage allows its inner volume to be reduced when fish is to be transferred therefrom, by lowering the upper arms towards the lower arms by the use of a winch or buoyancy arrangement, allowing the flexible net wall(s) to be folded several times in a controlled manner as part of the process. This is elaborated further in the description of the drawings below. A rigid centre column extending from the bottom unit ensures that the fish cage has a steady orientation in all phases of operation, including the net walls, whether stretched or folded.

Below, the present invention is described in further details in the form of exemplary, non-limiting embodiments illustrated by the enclosed drawings.
Figure 1 is a perspectival side view of the frame work of a fish cage according to the present invention;
Figure 2 is a perspectival side view of the frame work of Figure 1 with a few additional elements;
Figure 3A is a perspectival side view of the frame work of Figure 1 with a few additional elements different from the elements of Figure 2;
Figure 3B is a perspectival side view of the Figure 3A with yet additional elements;
Figure 4 is an illustration of a section of Figure 3B with an element thereof enlarged;
Figure 5A is a perspectival side view of the frame work of Figure 1 with a few additional elements,
similar to, but not identical to, the elements shown in Figure 3A;
Figure 5B is a perspectival side view of the Figure 5A with yet additional elements;
Figures 6A to 6C are side sectional illustrations of two interconnected net walls constituting part of the fish cage according to the present invention, in three different positions.
Figure 7 is an illustration of a plurality of fish cages according to the present invention connected to a common power and fodder station.

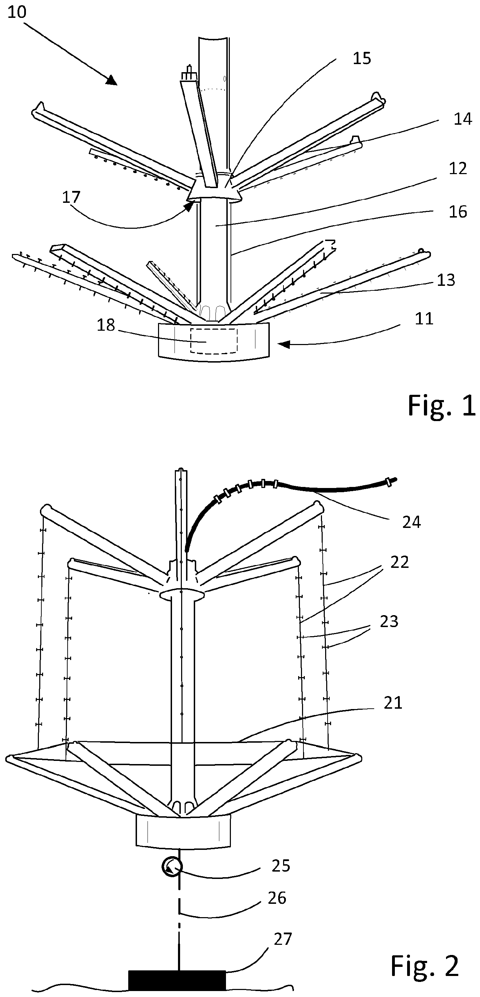

Figure 1 is a side schematic view of the frame work of a fish cage 10 in accordance with the present invention, comprising a bottom unit 11, a centre column 12 attached to the bottom unit 11, a number of radially extending lower arms 13 arranged around the centre column 12 at or near the bottom unit 11 as well as radially extending upper arms 14 attached to a roof 15 slidably arranged around the centre column 12. Also shown are chains 16 arranged between the bottom unit 11 and the roof 15 for the purpose of raising and lowering the roof 15 and thereby the upper arms 14. In the embodiment shown by Figure 1, there are six upper and six lower arms, arranged to suspend between them at least one tube like net wall defining the space to be occupied by the marine species in question, in particular fish. Generally, the number of lower arms (13) is at least four, more preferably at least six, and the number of upper arms (14) is equal to the number of lower arms.

By schematic is meant that the figure does not necessarily show all features that will be included in an actual embodiment and that the mutual dimensions are not necessarily correct.

As part of the roof 15, at least one air pocket 17 may be defined by the side walls and top wall thereof, providing some buoyancy and a place for fish to adjust the pressure of their air bladder. Also, the bottom unit 11 may, and typically will contain at least one buoyancy chamber 18 for providing buoyancy to the structure as a whole.

Figure 2 is a side schematic view of the frame work of Figure 1, showing a horizontal line 21 being attached to the outermost end of each lower arm 13, thereby constituting a horizontal, polygonal shape at the lower end of the cage, defining the outer boundary of the "floor" of the fish cage. With the shown structure of six upper and six lower arms, each arm is angularly separated by 60 degrees from its adjacent arms and the polygonal shape of the line 21 is a hexagonal one.

As also shown in Figure 2, the positioning of the upper arms 14 as compared to the lower arms 13 deviates by 30 degrees so that each upper arm is positioned centred between two lower arms and vice versa. From a point close to the outermost end of each upper arm, a vertical line 22 extends mainly vertically down to an attachment point on the line 21 in between two lower arms 13 and more precisely at or near the mid-point between the two lower arms in question.

To each of the lines 22, a number of battens 23 are slidingly attached. The battens 23 extends in opposite direction with a mainly horizontal orientation and are arranged to have one end attached to an inner net wall and the other end attached to an outer net wall. The battens 23 are rigid and will not fold or bend to any substantial degree and serve to hold the inner and the outer net walls separated at all times. The battens may be provided with buoyancy elements or weight elements, the significance of which to be explained below.

Figure 2 also shows a hose 24 for transferring live fish to a vessel or the like at the sea surface. It furthermore shows a winch 25 located at the bottom unit 11, connected to a mooring line 26 between the bottom unit and a base 27 on the sea floor. Although shown only in Figure 2, the hose 24, the winch 25, and the mooring line 26 will typically be present in connection with the different variants and embodiments of the present invention.

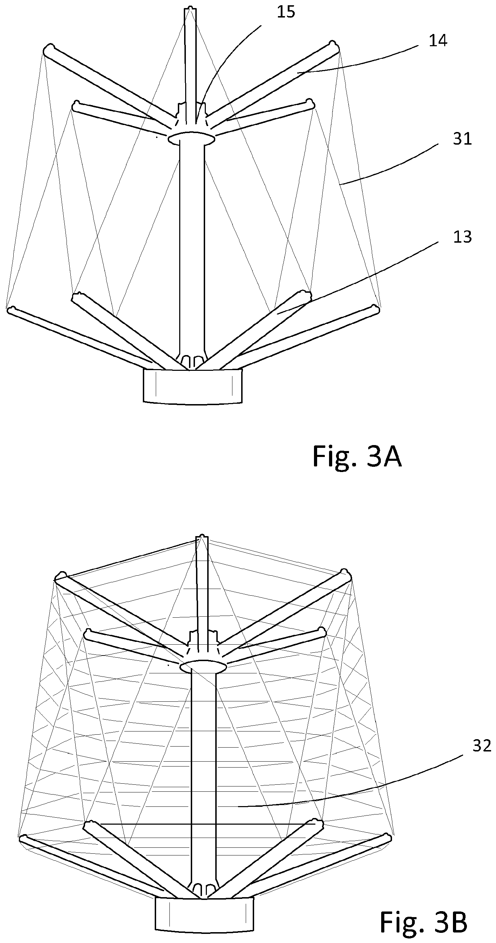

Figure 3A shows the framework from figures 1 and 2 with an element of an outer net wall, attached thereto. This is for illustrational purpose only, since the separate elements of the net walls will not be separated in practice. The net wall element shown is a line 31 which is attached to every lower and every upper arm in a criss-cross pattern, providing a tight and straight line when the roof of the fish cage is in its uppermost position.

Figure 3B shows the fish cage from figure 3A with an additional element of the net wall illustrated, namely a plurality of horizontal lines 32 around the periphery of the fish cage, each of which for being attached to one end of one the battens 23 shown in figure 2. It should be mentioned that the horizontal lines shown does not give an indication of the mesh size of the net wall. There may be a plurality of meshes in between each of the shown horizontal lines.

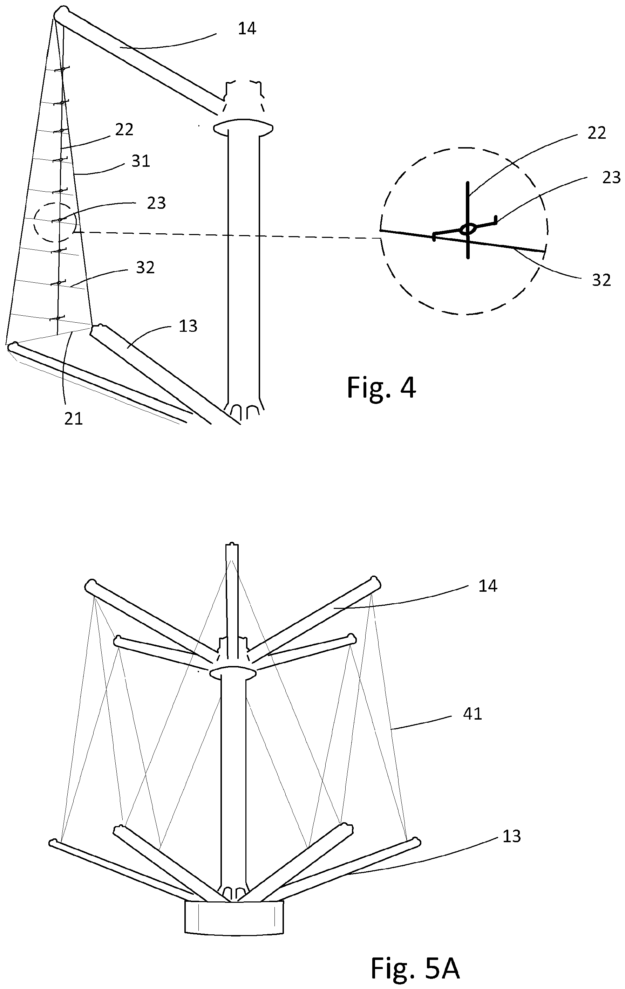

Figure 4 is an enlargement showing a top arm 14, two bottom arms 13, the criss-cross type line 31 of the net wall, the plurality of horizontal lines 32 of the net wall, as well as the lines 22 (figure 2) on which the battens 23 are slidably arranged. As best shown by the further enlargement to the right, one end of the batten 23 is attached to the horizontal line 32 while the other end is free, but intended to be attached to a horizontal line of an inner net wall. It should be noted that the battens 23 may be attached to the net wall in different ways, hereunder in a juncture between a horizontal line and a vertical line.

Generally speaking, the inner and the outer net walls are separated by battens 23 slidingly arranged on lines 22 extending between the upper 14 and lower arms 13. In practice, the lines 22 may be attached directly to the upper 14 and lower arms 13 or via lines, such as illustrated line 21 extending between the lower arms 13. In a similar manner to line 21 a line (not shown) may, as an alternative, be arranged at the upper arms 14 for the line 22 to be attached thereto.

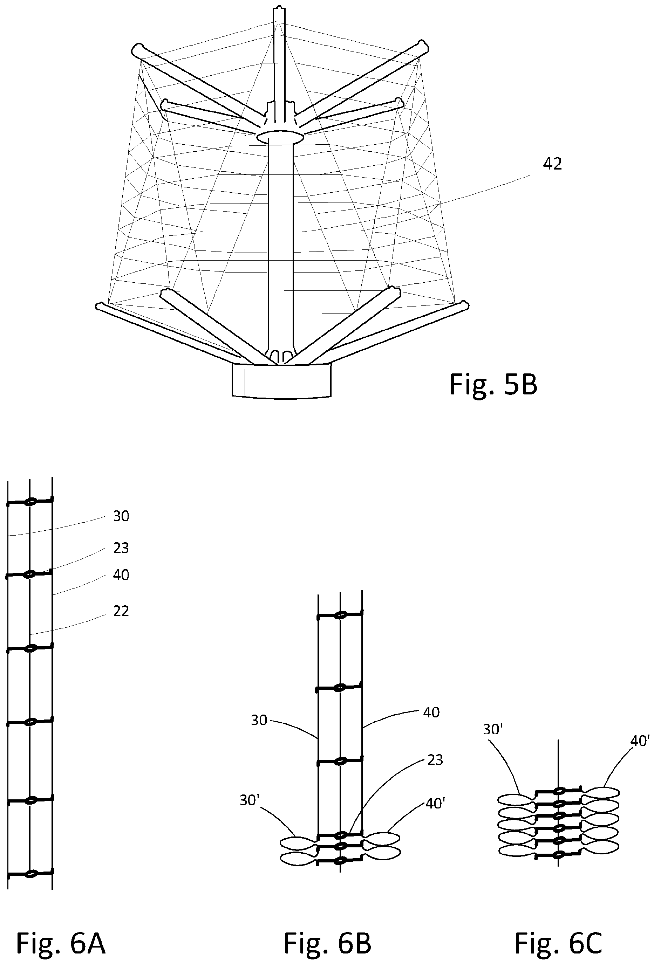

Figure 5A is rather similar to figure 3A, the difference being that Figure 6 shows a line 41 being an element of an inner net wall. The line 41 is arranged in a criss-cross pattern between lower 13 and upper arms 14 and are attached to the arms 13, 14 a distance from their outer ends corresponding to the horizontal extension of the battens 23.

In a similar manner, Figure 5B is an illustration of horizontal lines 42 of the inner net wall similarly to the horizontal lines of the outer net wall illustrated in Figure 4. Each of these horizontal lines is arranged to be attached to one end of one the battens 23 shown in figure 2, to thereby connect the inner and the outer net wall via these battens and at the same time ensure that the outer and inner net wall will not entangle with one another.

Figure 6A is a schematic side sectional view of an outer net wall 30, an inner net wall 40, a vertical line 22 serving as a guide for sliding battens 23, one end of which being attached to the outer net wall 30 and the other end attached to the inner net wall 40 in order avoid the outer and the inner net wall from being entangled with one another, in particular when the net walls are folded. As shown in Figure 6A, the net walls are all stretched, corresponding to a situation in which the upper arms 14 are in their top position.

Figure 6B shows principally the same as Figure 6A but in a situation in which the upper arms (not shown) is lowered to some extent, thereby causing the outer 30 and inner net wall 40 to form loops 30' and 40' while the battens 23 are gathered on top of one another. The battens 23 and/ or the net walls 30, 40 may have a density higher than the density of water, causing the lower part of the net walls to fold first, as shown. It is an option to use battens with a density lower than the density of water, which may cause the upper part of the net walls to fold first, assuming that the net walls as such do not have a density high enough to counteract the effect of the lightweight battens. In embodiments in which the battens have a density making them function as weight elements, additional weight elements may be attached to the net wall along the horizontal lines along the wall periphery at which the battens are attached to thereby increase the overall density at those lines, thereby improving the folding effect of the net wall. Similarly, in embodiments in which the battens have a low density making them function as buoyancy elements, additional buoyancy elements may be attached to the net wall along the horizontal lines along the wall periphery at which the battens are attached, also to improve the folding effect of the net wall.

Figure 6C shows a situation in which the folding has been complete, at least for the part of the net wall shown in this Figure. Naturally, the lowering of the upper arms and the folding of significant parts of the net walls, reduces the space available for the fish, which is a common means in connection to transfer of fish out of a fish cage.

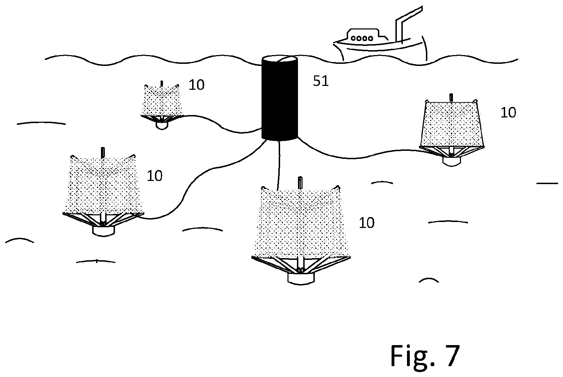

Figure 7 shows an arrangement with a plurality of fish cages 10 according to the present invention connected to a common supply 51 of power and feed, the latter optionally being a barge, SPAR buoy or other floating or submerged device.

With regard to dimensions, these may be varied within wide limits according to need. Typically, the diameter of the fish cage is in the range of from 5 metres to 60 meters while the height of the fish cage in the range of from 15 to 55 meters.

The overall volume of the buoyancy elements of the bottom unit is typically in the range of from 0 to 50 m³ while the overall volume of the buoyancy elements of the roof is in the range of from 0 to 50 m³.

The air pocket (17) at the top section is dimensioned in dependency upon the volume of the fish cage, its intended depth position in the water, and the duration for the intended use at such depth.

The bottom unit 11 will typically exhibit a connection member or socket arranged to connect to an umbilical from a station or supply arranged above or below the sea surface.

## Claims

1. Submersible fish cage (10) for sea-based farming of marine species, comprising a bottom unit (11), a centre column (12) attached to the bottom unit (11), a plurality of lower arms (13) radially oriented in relation to the centre column and evenly distributed around the centre column (12), directly or indirectly attached to the centre column, a plurality of upper arms (14) radially oriented in relation to the centre column and evenly distributed around the centre column, and at least one net wall (30) attached to the upper (14) and lower arms (13) in a manner defining a closed space for marine species, the upper arms (14) being attached to the centre column (12) via a roof (15) arranged around the centre column with means allowing vertical adjustment of the roof (15) in relation to the bottom unit (11), to thereby allow the volume defined by the net wall to be similarly adjusted, an outer net wall (30) and an inner net wall (40) being suspended between the upper arms (14) and the lower arms (13), **characterized in that** the outer net wall (30) and the inner net wall (40) are separated by battens (23) slidingly arranged on lines (22) extending between the upper (14) and lower arms (13).

2. Submersible fish cage (10) as claimed in claim 1, wherein the roof (15) comprises at least one air pocket (17) defined by an air-tight roof and side walls.

3. Submersible fish cage (10) as claimed in claim 1 or 2, wherein the bottom unit (11) comprises at least one buoyance chamber (18).

4. Submersible fish cage (10) as claimed in any one of the preceding claims, wherein the number of lower arms (13) is at least four, more preferably at least six, and the number of upper arms (14) is equal to the number of lower arms.

5. Submersible fish cage (10) as claimed in any preceding claim, wherein a sea floor mooring line (26) is arranged via a winch (25) between the bottom unit (11) and a sea floor base (27.

6. Submersible fish cage (10) as claimed in any one of the preceding claims, wherein the diameter of the fish cage (10) is in the range of from 5 meters to 60 meters.

7. Submersible fish cage as claimed in any one of the preceding claims, wherein the height of the fish cage is in the range of from 15 to 55 meters.

8. Submersible fish cage (10) as claimed in any one of the preceding claims, wherein the overall volume of the at least one buoyancy chamber (18) of the bottom section is in the range of 0 to 50 m³.

9. Submersible fish cage (10) as claimed in any one of the preceding claims, wherein the overall volume of the at least one air pocket (17) at the roof (15) is in the range of 0 to 50 m³.

10. Submersible fish cage (10) as claimed in any one of the preceding claims, wherein the arms (13, 14) of the bottom unit (11) and the roof (15) is made in a strong lightweight material selected from the group consisting of composite materials and lightweight metal materials dimensioned to be dimensionally stable at all occurring operational loads.

## Patentansprüche

1. Tauchfähiger Fischkäfig (10) für die meeresbasierte Haltung mariner Spezies, umfassend eine Bodeneinheit (11), eine Mittelstütze (12), die an der Bodeneinheit (11) befestigt ist, eine Vielzahl von unteren Armen (13), die radial in Bezug auf die Mittelstütze ausgerichtet und gleichmäßig um die Mittelstütze (12) verteilt sind, direkt oder indirekt an der Mittelstütze befestigt, eine Vielzahl von oberen Armen (14), die radial in Bezug auf die Mittelstütze ausgerichtet und gleichmäßig um die Mittelstütze verteilt sind, und mindestens eine Netzwand (30), die an den oberen (14) und unteren Armen (13) in einer Weise befestigt ist, die einen geschlossenen Raum für marine Spezies definiert, wobei die oberen Arme (14) über ein Dach (15), das um die Mittelstütze angeordnet ist, mit Mitteln, die eine vertikale Verstellung des Dachs (15) in Bezug auf die Bodeneinheit (11) ermöglichen, an der Mittelstütze (12) befestigt sind, um somit das durch die Netzwand definierte Volumen entsprechend anzupassen, wobei eine äußere Netzwand (30) und eine innere Netzwand (40) zwischen den oberen Armen (14) und den unteren Armen (13) aufgehängt sind, **dadurch gekennzeichnet, dass** die äußere Netzwand (30) und die innere Netzwand (40) durch Leisten (23) getrennt sind, die gleitend auf Leinen (22) angeordnet sind, die sich zwischen den oberen (14) und unteren Armen (13) erstrecken.

2. Tauchfähiger Fischkäfig (10) nach Anspruch 1, wobei das Dach (15) mindestens eine Luftkammer (17) umfasst, die durch ein luftdichtes Dach und Seitenwände definiert ist.

3. Tauchfähiger Fischkäfig (10) nach Anspruch 1 oder 2, wobei die Bodeneinheit (11) mindestens eine Auftriebskammer (18) umfasst.

4. Tauchfähiger Fischkäfig (10) nach einem der vorhergehenden Ansprüche, wobei die Anzahl der unteren Arme (13) mindestens vier beträgt, vorzugsweise mindestens sechs, und die Anzahl der oberen Arme (14) der Anzahl der unteren Arme entspricht.

5. Tauchfähiger Fischkäfig (10) nach einem der vorhergehenden Ansprüche, wobei eine Meeresbodenverankerungsleine (26) über eine Winde (25) zwischen der Bodeneinheit (11) und einer Meeresbodengrundlage (27) angeordnet ist.

6. Tauchfähiger Fischkäfig (10) nach einem der vorhergehenden Ansprüche, wobei der Durchmesser des Fischkäfigs (10) im Bereich von 5 Metern bis 60 Metern liegt.

7. Tauchfähiger Fischkäfig (10) nach einem der vorhergehenden Ansprüche, wobei die Höhe des Fischkäfigs im Bereich von 15 Metern bis 55 Metern liegt.

8. Tauchfähiger Fischkäfig (10) nach einem der vorhergehenden Ansprüche, wobei das Gesamtvolumen der mindestens einen Auftriebskammer (18) der Bodeneinheit im Bereich von 0 bis 50 m³ liegt.

9. Tauchfähiger Fischkäfig (10) nach einem der vorhergehenden Ansprüche, wobei das Gesamtvolumen der mindestens einen Luftkammer (17) an dem Dach (15) im Bereich von 0 bis 50 m³ liegt.

10. Tauchfähiger Fischkäfig (10) nach einem der vorhergehenden Ansprüche, wobei die Arme (13, 14) der Bodeneinheit (11) und das Dach (15) aus einem starken, leichten Material hergestellt sind, das aus der Gruppe von Verbundwerkstoffen und leichten Metallmaterialien ausgewählt ist, welche dimensioniert sind, um unter allen auftretenden Betriebsbelastungen dimensionsstabil zu sein.

## Revendications

1. Cage à poissons submersible (10) pour l'élevage en mer d'espèces marines, comprenant une unité inférieure (11), une colonne centrale (12) fixée à l'unité inférieure (11), une pluralité de bras inférieurs (13) orientés radialement par rapport à la colonne centrale et répartis uniformément autour de la colonne centrale (12), directement ou indirectement fixés à la colonne centrale, une pluralité de bras supérieurs (14) orientés radialement par rapport à la colonne centrale et répartis uniformément autour de la colonne centrale, et au moins une paroi en filet (30) fixée aux bras supérieurs (14) et inférieurs (13) de manière à définir un espace fermé pour les espèces marines, les bras supérieurs (14) étant fixés à la colonne centrale (12) par l'intermédiaire d'un toit (15) disposé autour de la colonne centrale avec des moyens permettant un réglage vertical du toit (15) par rapport à l'unité inférieure (11), pour permettre ainsi un réglage similaire du volume défini par la paroi en filet, une paroi en filet extérieure (30) et une paroi en filet intérieure (40) étant suspendues entre les bras supérieurs (14) et les bras inférieurs (13), **caractérisé en ce que** la paroi extérieure en filet (30) et la paroi intérieure en filet (40) sont séparées par des tasseaux (23) disposés de manière coulissante sur des lignes (22) s'étendant entre les bras supérieurs (14) et inférieurs (13).

2. Cage à poissons submersible (10) selon la revendication 1, dans laquelle le toit (15) comprend au moins une poche d'air (17) définie par un toit étanche à l'air et des parois latérales.

3. Cage à poissons submersible (10) selon la revendication 1 ou 2, dans laquelle l'unité inférieure (11) comprend au moins une chambre de flottabilité (18).

4. Cage à poissons submersible (10) selon l'une quelconque des revendications précédentes, dans laquelle le nombre de bras inférieurs (13) est d'au moins quatre, plus préférablement d'au moins six, et le nombre de bras supérieurs (14) est égal au nombre de bras inférieurs.

5. Cage à poissons submersible (10) selon l'une quelconque des revendications précédentes, dans laquelle une ligne d'amarrage au fond marin (26) est disposée via un treuil (25) entre l'unité inférieure (11) et une base de fond marin (27).

6. Cage à poissons submersible (10) selon l'une quelconque des revendications précédentes, dans laquelle le diamètre de la cage à poissons (10) est compris entre 5 mètres et 60 mètres.

7. Cage à poissons submersible selon l'une quelconque des revendications précédentes, dans laquelle la hauteur de la cage à poissons est comprise entre 15 et 55 mètres.

8. Cage à poissons submersible (10) selon l'une quelconque des revendications précédentes, dans laquelle le volume global de la au moins une chambre de flottabilité (18) de la section inférieure est compris entre 0 et 50 m³.

9. Cage à poissons submersible (10) selon l'une quelconque des revendications précédentes, dans laquelle le volume global de la au moins une poche d'air (17) au niveau du toit (15) est compris entre 0 et 50 m³.

10. Cage à poissons submersible (10) selon l'une quelconque des revendications précédentes, dans laquelle les bras (13, 14) de l'unité inférieure (11) et le toit (15) sont fabriqués dans un matériau léger et résistant choisi dans le groupe constitué de matériaux composites et de matériaux métalliques légers dimensionnés pour être dimensionnellement stables à toutes les charges opérationnelles survenantes.
